# EUROPÄISCHE PATENTANMELDUNG

(11) **EP 3 569 879 A1**
(43) Veröffentlichungstag der Anmeldung: **20.11.2019**
(21) Anmeldenummer: 19173866.5
(22) Anmeldetag: 10.05.2019
(51) Int. Cl.: F16B 37/04, F16B 33/00, F16B 5/06

(54) **SCHWIMMENDE, VERLIERGESICHERTE ANORDNUNG EINES VERBINDUNGSELEMENTES AN EINEM BAUTEIL**

(30) Priorität: 17.05.2018 DE 102018111959
(71) Anmelder: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(57) **Zusammenfassung**

Die Erfindung betrifft eine schwimmende, verliergesicherte Anordnung eines Verbindungselements (1) an einem aus einem metallischen Flachmaterial hergestellten Bauteil (2), bei der das Verbindungselement (1) sich entlang einer Längsachse (LA) erstreckt und zumindest einen Kopfabschnitt (1.1) und einen daran entlang der Längsachse (LA) anschließenden, gegenüber dem Kopfabschnitt (1.1) zurückversetzten Schaftabschnitt (1.2) aufweist, bei der der Schaftabschnitt (1.2) zumindest abschnittsweise durch eine Durchbrechung (2') im Bauteil (2) geführt ist und zumindest im Bereich des dem Kopfabschnitt (1.1) gegenüberliegenden freien Ende (1.2') des Schaftabschnittes (1.2) mit einem Halteblechelement (3) derart verbunden ist, dass das Verbindungselement (1) schwimmend und verliergesichert am Bauteil (2) angeordnet ist, wobei der Schaftabschnitt (1.2) und/oder das Halteblechelement (3) jeweils Verriegelungsmittel (4) aufweisen, die mit im Bereich der Durchbrechung (2') des Bauteils (2) vorgesehenen, korrespondierenden Verriegelungsmitteln (5) derart zusammenwirken, dass das in der Durchbrechung (2') des Bauteils (2) zumindest abschnittsweise aufgenommene Verbindungselement (1) gegen ein zumindest abschnittsweises Verdrehen um die Längsachse (LA) in Bezug auf das Bauteil (2) gesichert ist.

## Beschreibung

Die Erfindung betrifft eine schwimmende, verliergesicherte Anordnung eines Verbindungselementes an einem Bauteil.

Im Bereich der Verbindungstechnik ist es bei einer Vielzahl von Anwendungen erforderlich, ein vorzugsweise gewindetragendes Verbindungselement, wie beispielsweise eine Mutter, an einer Bauteiloberfläche zu befestigen. Um einen Toleranzausgleich im Hinblick auf den Verschraubungspunkt in und bezogen auf die Bauteiloberfläche zu erreichen, finden bevorzugt schwimmende Anordnung des Verbindungselementes an der Bauteiloberfläche Verwendung. Eine typische Montagesituation betrifft beispielsweise ein nur einseitig zugängliches Bauteil, bei dem auf der nicht zugänglichen Bauteiloberfläche eine schwimmende Anordnung eines Verbindungselementes erforderlich ist.

Hierzu finden beispielsweise Verbindungselemente mit einer käfigartigen Halterung aus einem metallischen Flachmaterial Verwendung, bei denen das Verbindungselement in der käfigartigen Halterung aus einem bleibend verformbaren metallischen Flachmaterial aufgenommen ist und über dieses an der Bauteiloberfläche bzw. einer darin vorgesehenen Vorlochung oder Bohrung schwimmend angeordnet ist.

Gewindetragende Verbindungselemente derartigen Aufbaus werden häufig auch als "Käfigmutterelemente" bzw. "Käfigmuttern" bezeichnet. Mittels derartiger Käfigmuttern wird ein Toleranzausgleich des Verschraubungspunktes in x/y-Richtung, d.h. in der Ebene der Bauteiloberfläche erreicht. Der Käfig derartiger Käfigmuttern wird hierbei häufig als Stanzteil hergestellt und auf einem Blechelement verschweißt. In diesem Käfig ist ein kleineres Mutterelement eingeschlossen, welches in x- und γ-Richtung bzw. in der Ebene der Bauteiloberfläche beweglich ist. Nachteilig ist die Herstellung des Käfigs und die Verschweißung dessen auf dem Blechelement arbeits- und kostenintensiv, zumal diese Montage üblicher Weise manuell durchgeführt wird. Darüber hinaus weisen derartig Käfigmutter ein hohes Gewicht und damit verbunden einen hohen Materialbedarf auf.

Ausgehend davon ist es Aufgabe der Erfindung, eine schwimmende und verliergesicherte Anordnung eines Verbindungselementes an einem Bauteil anzugeben, welche zusätzlich eine Verdrehsicherung aufweist und ohne hohen Material- und Zeitaufwand herstellbar ist. Die Aufgabe wird durch die Merkmale des Patentanspruches 1 gelöst.

Einer der wesentlichen Aspekte der erfindungsgemäßen schwimmenden, verliergesicherten Anordnung ist darin zu sehen, dass das Verbindungselement sich entlang einer Längsachse erstreckt und zumindest einen Kopfabschnitt und einen daran entlang der Längsachse anschließenden, gegenüber dem Kopfabschnitt zurückversetzten Schaftabschnitt aufweist, dass der Schaftabschnitt zumindest abschnittsweise durch eine Durchbrechung im Bauteil geführt ist und zumindest im Bereich des dem Kopfabschnitt gegenüberliegenden freien Ende des Schaftabschnittes mit einem Halteblechelement derart verbunden ist, dass das Verbindungselement schwimmend und verliergesichert am Bauteil angeordnet ist, wobei der der Schaftabschnitt und/oder das Halteblechelement jeweils Verriegelungsmittel aufweisen, die mit im Bereich der Durchbrechung des Bauteils vorgesehenen, korrespondierenden Verriegelungsmitteln des Bauteils derart zusammenwirken, dass das in der Durchbrechung des Bauteils zumindest abschnittsweise aufgenommene Verbindungselement gegen ein zumindest abschnittsweises Verdrehen um die Längsachse in Bezug auf das Bauteil gesichert ist. Das Bauteil ist dabei vorzugsweise zwischen dem Kopfabschnitt des Verbindungselementes und dem Halteblechelement aufgenommen. Besonders vorteilhaft kann damit der Montage- und Materialaufwand für eine derartige schwimmende, verlier- und verdrehgesicherte Anordnung eines Verbindungselementes an einem Bauteil wesentlich reduziert werden. Insbesondere kann die erfindungsgemäße Anordnung vollautomatisiert hergestellt werden, wodurch im Vergleich zu einer manuellen Montage des Käfigs bei Käfigmuttern, eine deutliche Kostenersparnis erzielt werden kann. Auch kann damit der Energieverbrauch und Umweltbelastungen durch den Wegfall von Schweißverbindungen reduziert werden.

Weiterhin vorteilhaft weist das vorzugsweise aus einem metallischen Flachmaterial hergestellte Halteblechelement eine Durchbrechung auf, dessen Durchmesser und/oder Querschnittsform zumindest abschnittsweise an den Durchmesser und/oder die Querschnittsform zumindest des freien Endes des Schaftabschnittes des Verbindungselementes angepasst ist. Hierdurch wird eine entweder verliergesicherte Anordnung des Halteblechelementes am freien Ende Verbindungselementes erreicht.

In einer bevorzugten Ausführungsvariante ist das Halteblechelement gegen ein zumindest abschnittsweises Verdrehen um die Längsachse des Verbindungselementes am freien Ende des Schaftabschnittes des Verbindungselementes gesichert.

Weiterhin vorteilhaft weist das Halteblechelement eine Außenkontur und/oder Außenabmessungen auf, die eine Durchführung des Halteblechelementes durch die Durchbrechung des Bauteils sperren. Somit ist das Verbindungselement zumindest über den Kopfabschnitt an einem freien Ende und über das am gegenüberliegenden freien Ende angeordnete Halteblechelement gegen ein Herausfallen oder Auspressen aus der Durchbrechung im Bauteil gesichert.

Weiterhin vorteilhaft ist das Halteblechelement verschiebbar entlang der Längsachse am Schaftabschnitt des Verbindungselementes angeordnet. Alternativ oder zusätzlich ist das freie Ende des Schaftabschnittes derart in der Durchbrechung des Halteblechelementes aufgenommen, dass das freie Ende von der Unterseite des Halteblechelementes in die Durchbrechung zurückspringt. Dabei ist das Halteblechelement vorteilhaft gegen ein zumindest abschnittsweises Verdrehen um die Längsachse des Verbindungselementes am freien Ende des Schaftabschnittes des Verbindungselementes gesichert. Vorteilhaft kann hierdurch beim Verschrauben der erfindungsgemäßen Anordnung mit einem weiteren Bauteil eine Vorspannung eingebracht werden, und zwar kann das Verbindungselement, das Bauteil, das Halteblechelement sowie das weitere Bauteil entlang der Längsachse miteinander verspannt werden bzw. über das Drehmoment des Schraubmittels eine Vorspannung eingebracht werden. Vorzugsweise ist die Anbindung des Halteblechelements am Schaftabschnitt des Verbindungselementes derart gewählt, dass beim Einbringen des Drehmomentes eine Verschiebung des Halteelementes entlang des Schaftabschnittes mit einer Kraft möglich ist, die noch unterhalb der zur Herstellung der finalen Schraubverbindung erforderlichen Vorspannkraft liegt. Besonders vorteilhaft ist damit ein Vorspannen der erfindungsgemäßen Anordnung aus Verbindungselement, Bauteil und Halteblechelement über ein entsprechendes Zugmittel, beispielsweise ein Schraubelement problemlos möglich.

In einer bevorzugten Ausführungsvariante der Erfindung ist das freie Ende des Schaftabschnittes des Verbindungselementes vollständig in der Durchbrechung des Halteblechelementes aufgenommen und steht nicht über die Unterseite des Halteblechelementes hervor. Vorteilhaft bildet damit die Unterseite des Halteblechelementes eine ebene Anlagefläche aus. Vorzugsweise springt das freie Ende des Schaftabschnittes von der Unterseite in die Durchbrechung des Halteblechelementes zurück und gibt damit einen Toleranzspalt frei, welcher im Falle der Montage das Einbringen einer Vorspannung in die erfindungsgemäße Anordnung überhaupt ermöglicht.

Vorteilhaft sind die Verriegelungsmittel des Schaftabschnittes durch zumindest einen Verriegelungsabschnitt des Schaftabschnittes des Verbindungselementes gebildet, der eine von der Kreisform abweichende Querschnittsform aufweist.

Weiter vorteilhaft sind die Verriegelungsmittel des Halteblechelements durch zumindest einen am Halteblechelement vorgesehen oder als Teil dessen ausgebildeten Verriegelungsabschnitt mit einer von der Kreisform abweichenden Querschnittsform gebildet. Die korrespondierenden Verriegelungsmittel sind bei vorgenannten Ausführungsvarianten jeweils durch eine von der Kreisform abweichende Querschnittsform der Durchbrechung des Bauteils gebildet.

Besonders vorteilhaft sind die Querschnittsform des jeweiligen Verriegelungsabschnittes und die Querschnittsform der Durchbrechung hierbei derart gewählt, dass sich die Querschnittsformen bei einem in der Durchbrechung aufgenommenen Verriegelungsabschnitt und einem am Verbindungselement anliegenden Schraubmoment gegenseitig abstützen.

In einer Ausführungsvariante kann der zumindest eine Verriegelungsabschnitt einstückig oder einteilig mit dem Schaftabschnitt des Verbindungselementes ausgebildet sein. Alternativ kann der zumindest eine Verriegelungsabschnitt mehrteilig ausgebildet sein, und zwar einen ersten und zweiten, entlang der Längsachse aneinander anschließenden Teil aufweisen. Der erste Teil schließt sich beispielsweise unmittelbar an den Kopfabschnitt an und der darauffolgende zweite Teil ist im Vergleich dazu zumindest leicht querschnittsverjüngt ausgebildet, so dass ein gestufter Übergang zwischen dem ersten und zweiten Teil entsteht, der eine ringförmige Anlagefläche bildet. Beispielsweise kann bei Anliegen des Halteblechelementes an der ringförmigen Anlagefläche beim Einbringen eines Schraubmittels in das Verbindungselement bzw. das Mutterelement das Bauteil zwischen dem Kopfabschnitt und dem Halteblechelement verspannt werden bzw. eine entsprechende Vorspannung eingebracht werden.

In einer alternativen Ausführungsvariante ist der Verriegelungsabschnitt durch zumindest einen von der Oberseite des Halteblechelementes nach außen wegstehenden hülsenartigen Schaftabschnitt gebildet, der vorzugsweise einteilig oder einstückig mit dem Halteblechelement ausgebildet ist.

Weiterhin vorteilhaft sind die Querschnittsform des Verriegelungsabschnittes und/oder die Querschnittsform der Durchbrechung und/oder die Querschnittsform des hülsenartigen Schaftabschnittes von der Kreisform abweichen, und zwar quadratisch, rechteckförmig, polygonförmig, dreieckförmig, oval oder sternförmig ausgebildet.

Vorteilhaft ist das Verbindungselement als gewindetragendes Verbindungselement, insbesondere Mutterelement ausgebildet und die Durchbrechung im Bauteil und/oder die Durchbrechung im Halteblechelement sind durch eine Vorlochung oder eine Bohrung gebildet.

Weiterhin vorteilhaft können am freien Ende des Schaftabschnittes des Verbindungselementes mehrere stirnseitig angeordnete, nasenförmige Materialvorsprünge und an der Unterseite des Halteblechelementes mehrere, zur Durchbrechung hin geöffnete korrespondierende Ausnehmungen vorgesehen sind, in welche die nasenförmigen Materialvorsprünge zur Herstellung einer Verdrehsicherung plastisch verformbar sind. Es versteht sich, dass natürlich auch alternative Verbindungstechnologien, beispielsweise die Verwendung einer Presspassung möglich sind.

Ebenfalls ist Gegenstand der vorliegenden Erfindung eine vorgefertigte Baugruppe umfassend eine erfindungsgemäße Anordnung, bei der das Bauteil eine flächige Sicke aufweist, in der die Durchbrechung angeordnet ist.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft ein schematischer Längsschnitt durch eine schwimmende, verliergesicherte Anordnung eines Verbindungselements an einem Bauteil gemäß der Erfindung,
- Fig. 2: beispielhaft ein schematischer Längsschnitt durch ein als Mutterelement ausgebildetes Verbindungselement,
- Fig. 3: beispielhaft eine schematische Draufsicht auf die Unterseite eines Halteblechelementes,
- Fig. 4: beispielhaft eine schematische Draufsicht auf die Oberseite eines aus einem metallischen Flachmaterial hergestellten Bauteils,
- Fig. 5: beispielhaft eine schematische Seitenansicht eines Verbindungselementes mit einem einteiligen Verriegelungsabschnitt,
- Fig. 6: beispielhaft eine schematische Seitenansicht eines Verbindungselementes mit einem zweiteiligen Verriegelungsabschnitt,
- Fig. 7: beispielhaft eine schematische Ansicht der Unterseite eines Verbindungselementes mit einer Variante eines einteiligen Verriegelungsabschnittes,
- Fig. 8: beispielhaft eine schematische Ansicht der Unterseite eines Verbindungselementes mit einer alternativen Variante eines einteiligen Verriegelungsabschnittes,
- Fig. 9: beispielhaft eine schematische Ansicht der Unterseite eines Verbindungselementes mit einer Variante eines zweiteiligen Verriegelungsabschnittes,
- Fig. 10: beispielhaft eine schematische Seitenansicht eines Halteblechelementes mit einem Verriegelungsabschnitt in Form eines hülsenartigen Flansches,
- Fig. 11: beispielhaft eine schematische Ansicht der Unterseite des Halteblechelementes gemäß Figur 10,
- Fig. 12: beispielhaft einen seitlichen Längsschnitt durch eine erfindungsgemäße Anordnung in Form einer vorgefertigten Baugruppe,
- Fig. 13: beispielhaft eine Anbindung einer erfindungsgemäßen Anordnung in Form einer vorgefertigten Baugruppe an ein weiteres Bauteil.

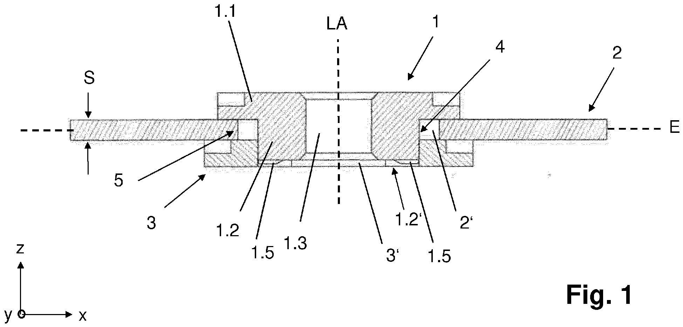

In Figur 1 ist beispielhaft eine erfindungsgemäße Anordnung eines Verbindungselements 1 an einem aus einem Flachmaterial hergestellten Bauteil 2, bei der das Verbindungselement 1 sowohl schwimmend als auch verliergesichert am Bauteil 2 angeordnet ist. Das Bauteil 2 kann beispielsweise aus Metall oder Kunststoff hergestellt sein.

Das Bauteil 2 ist vorzugsweise durch ein blechförmiges Bauteil oder ein blechförmiges Werkstück mit zumindest einem abschnittsweise flachen Montagebereich gebildet.

Zur genaueren Erläuterung der erfindungsgemäßen Anordnung ist in einzelnen Figuren ein kartesisches Koordinatensystem umfassend eine x-, γ- und z-Achse eingezeichnet. Das flache metallische Bauteil 2 erstreckt sich hierbei zumindest im Verbindungsbereich entlang einer Ebene E, die parallel zu einer durch die x- Achse und die γ- Achse aufgespannten Ebene verläuft. Das Verbindungselement 1 erstreckt sich ferner entlang einer Längsachse LA, welche parallel zur z-Achse verläuft.

Unter einer verliergesicherten Anordnung des Verbindungselementes 1 am Bauteil 2 im Sinne der Erfindung wird eine Befestigung des Verbindungselementes 1 im oder am Bauteil 2 verstanden, mittels der das Verbindungselement 1 im montierten Zustand gegen ein Verlieren und/oder Auspressen gesichert ist. Vorzugsweise wird das Verbindungselement 1 hierzu zumindest abschnittsweise durch eine im Bauteil 2 vorgesehene Durchbrechung 2' hindurchgeführt und ist insbesondere gegen ein Auspressen aus dieser Durchbrechung 2' des Bauteils 2 entlang der z-Achse gesichert. Die Durchbrechung 2' ist beispielsweise durch eine Vorlochung oder eine entsprechende Bohrung im Bauteil 2 gebildet.

Unter einer schwimmenden Anordnung des Verbindungselementes 1 am Bauteil 2 wird im Sinne der Erfindung zumindest eine entlang Ebene E des Bauteils 2, d.h. in x- und/oder γ-Richtung verschiebbare bzw. bewegliche Anbindung des Verbindungselementes 1 am Bauteil 2 verstanden. Zusätzlich kann auch zumindest eine geringfügige Verschiebbarkeit entlang der z-Achse vorgesehen sein. Durch die dadurch vorgegebene relative Beweg- bzw. Verschiebbarkeit des abschnittsweise durch die Durchbrechung 2' geführten Verbindungselementes 1 in Bezug auf das Bauteil 2 ist ein Toleranzausgleich bei der Montage des Bauteils 2 unter Verwendung des daran gehaltenen Verbindungselementes 1 möglich.

Das Verbindungselement 1 ist im vorliegenden Ausführungsbeispiel durch ein gewindetragendes Verbindungselement, insbesondere ein Mutterelement gebildet. Die Erfindung ist jedoch keinesfalls auf ein Mutterelement beschränkt, vielmehr können auch Schraubelemente oder Bolzenelemente erfindungsgemäß schwimmend und verliergesichert im Bauteil 2 angeordnet werden.

Das Verbindungselement 1 erstreckt sich bei der in Figur 1 dargestellten Anordnung entlang der z-Achse, d.h. deren Längsachse LA verläuft im montierten Zustand näherungsweise senkrecht zur Ebene E des Bauteils 2, zumindest jedoch zur Ebene E des Montagebereiches des Bauteils 2. Ferner weist das Verbindungselement 1 zumindest einen Kopfabschnitt 1.1 und einen entlang der Längsachse LA daran anschließenden, gegenüber dem Kopfabschnitt 1.1 in Richtung der Längsachse LA zurückversetzten Schaftabschnitt 1.2 auf. Damit weisen die Außen- oder Mantelfläche des Kopfabschnittes 1.1 und des Schaftabschnittes 1.2 in Bezug auf die Längsachse LA eine unterschiedliche radiale Erstreckung auf, um eine Durchführung des Kopfabschnittes 1.1 durch die Durchbrechung 2' im Bauteil 2 zu blockieren.

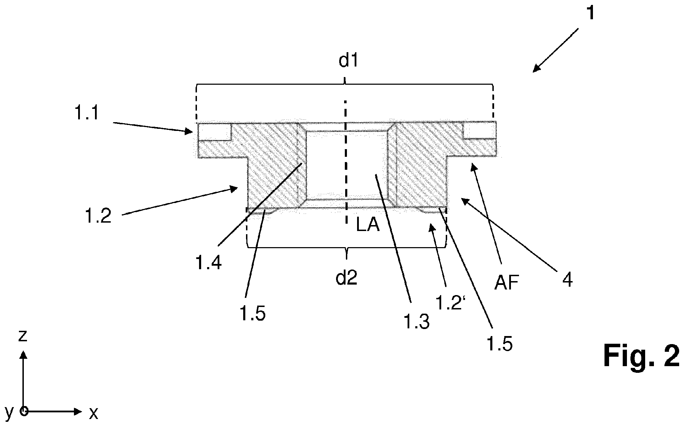

In Figur 2 ist beispielhaft ein schematischer Längsschnitt entlang der Längsachse LA durch ein als Mutterelement ausgebildetes Verbindungselement 1 dargestellt. Das Verbindungselement bzw. Mutterelement 1 weist dabei beispielsweise eine sich entlang der Längsachse LA erstreckende Durchgangsbohrung 1.3 mit einem Innengewinde 1.4 auf, welche sich vorzugsweise konzentrisch zur Längsachse LA vollständig über den Kopfabschnitt 1.1 und den Schaftabschnitt 1.2 des Mutterelementes 1 erstreckt. Der Durchmesser d1 des Kopfabschnittes 1.1 überschreitet zumindest abschnittsweise den Durchmesser d2 des Schaftabschnittes 1.2, so dass ein gestufter Übergang zwischen dem Kopf- und den Schaftabschnitt 1.1, 1.2 entsteht. Hierdurch bildet sich eine im Wesentlichen ringförmige, vorzugsweise ebene Anlagefläche AF an der Unterseite des Kopfabschnittes 1.1 aus, welche vorzugsweise parallel zur Oberseite des Kopfabschnittes 1.1 und konzentrisch um die Längsachse LA verläuft.

Zur schwimmenden und verliergesicherten Anordnung des Verbindungselementes 1 bzw. Mutterelementes am Bauteil 2 ist erfindungsgemäß ein Halteblechelement 3 vorgesehen, welches vorzugsweise aus einem metallischen Flachmaterial hergestellt ist. Das Halteblechelement 2 ist beispielsweise scheibenförmig, vorzugsweise ringscheibenförmig ausgebildet.

Das Halteblechelement 3 weist ferner eine vorzugsweise im Zentrum des Halteblechelementes 3 angeordnete Durchbrechung 3' auf, dessen Durchmesser d3 und/oder Querschnittsform zumindest abschnittsweise an den Durchmesser d2 und/oder die Querschnittsform zumindest des freien Endes 1.2' des Schaftabschnittes 1.2 des Verbindungselementes 1 angepasst ist.

Ferner ist das Halteblechelement 3, insbesondere im Hinblick auf dessen Außenabmessungen und/oder Außenkontur derart ausgebildet, dass eine Durchführung des mit dem mit dem freien Ende 1.2' des Schaftabschnittes 1.2 verbundenen Halteblechelementes 3 durch die Durchbrechung 2' des Bauteils 2 nicht möglich ist. Beispielsweise überschreiten die Außenabmessungen des Halteblechelementes 3 zumindest abschnittsweise die maximale Öffnungsbreite bm der Durchbrechung 2' des Bauteils 2.

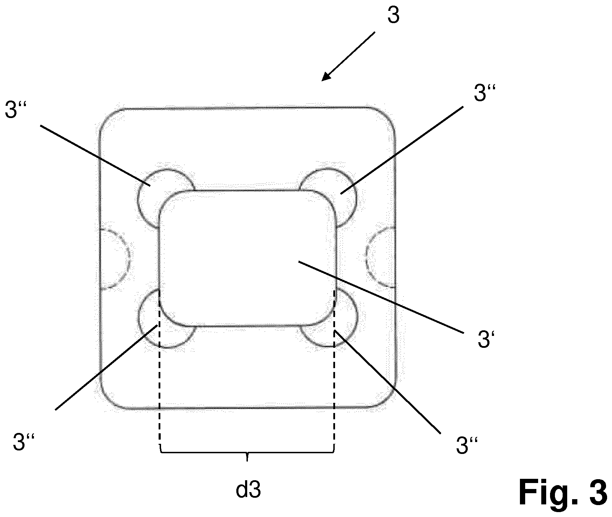

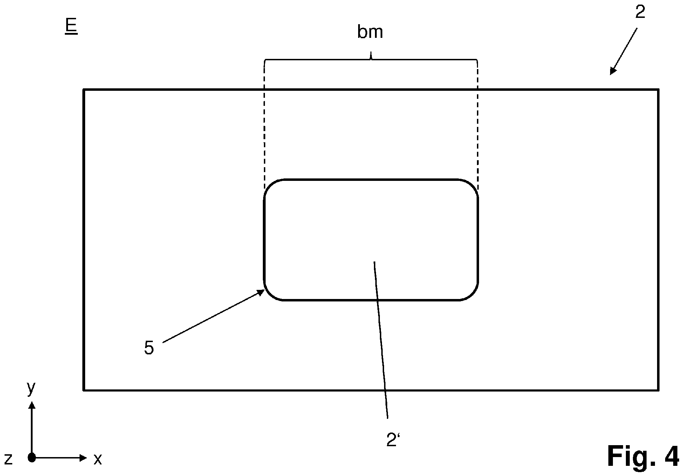

Figur 3 zeigt beispielhaft eine schematische Ansicht der Unterseite des in Figur 1 gezeigten Halteblechelementes 3 und in Figur 4 ist beispielhaft eine Draufsicht auf eine Ausführungsvariante eines Bauteils 2 dargestellt, welches durch ein Metallblechteil gebildet sein kann und eine prinzipiell beliebige Außenkontur aufweisen kann. Im vorliegenden Ausführungsbeispiel weist das Bauteil bzw. Metallblechteil 2 eine Bauteilstärke S auf und ist in Draufsicht rechteckförmig ausgebildet.

Wie in Figur 1 beispielhaft gezeigt ist der Schaftabschnitt 1.2 des Verbindungselementes 1 abschnittsweise durch die Durchbrechung 2' im Bauteil 2 geführt und zumindest im Bereich des dem Kopfabschnitt 1.1 gegenüberliegenden freien Ende 1.2' des Schaftabschnittes 1.2 mit dem Halteblechelement 3 derart verbunden, das das als Mutterelement ausgebildete Verbindungselement 1 schwimmend und verliergesichert am Bauteil 2 angeordnet ist. Hierzu wird vorzugsweise der Randbereich des freien Endes des Verbindungselementes 1 und/oder der Randbereich der Durchbrechung 3' jeweils zumindest abschnittsweise plastisch nach außen bzw. innen verformt, so dass das Halteblechelement 3 im Bereich der Durchbrechung 3' kraft- und/oder formschlüssig mit dem freien Ende 1.2' des Schaftabschnittes 1.2 des Verbindungselementes 1 verbunden ist. Alternativ kann zur Verbindung eine Presspassung Anwendung finden. Bevorzugt erfolgt hierbei die Verbindung des freien Ende 1.2' des Schaftabschnittes 1.2 mit dem Halteblechelement 3 derart, dass das freie Ende 1.2' des Schaftabschnittes 1.2 vollständig in der Durchbrechung 3' des Halteblechelementes 3 aufgenommen ist, d.h. nicht über die Unterseite des Halteblechelementes 3 hervorsteht. Damit besteht auch nach Herstellung der Verbindung zwischen dem freien Ende 1.2' des Schaftabschnittes 1.2 mit dem Halteblechelement 3 weiterhin eine ebene durch die Unterseite des Halteblechelementes 3 gebildete Anlagefläche.

Erfindungsgemäß weisen der der Schaftabschnitt 1.2 und/oder das Halteblechelement 3 jeweils Verriegelungsmittel 4 auf, die mit im Bereich der Durchbrechung 2' des Bauteils 2 vorgesehenen, korrespondierenden Verriegelungsmitteln 5 derart zusammenwirken, dass das in der Durchbrechung 2' des Bauteils 2 zumindest abschnittsweise aufgenommene Verbindungselement 1 gegen ein zumindest abschnittsweises Verdrehen um die Längsachse LA in Bezug auf das Bauteil 2 gesichert ist. Damit ist das Verbindungselement 1 nicht nur schwimmend und verliergesichert, sondern auch zumindest teil- oder abschnittsweise verdrehgesichert im Bauteil 2 angeordnet bzw. in der Durchbrechung 2' des Bauteils 2 aufgenommen bzw. durch diese durchgeführt.

In einer bevorzugten Ausführungsvariante sind die Verriegelungsmittel durch die Ausbildung zumindest eines Verriegelungsabschnittes 4 am Schaftabschnitt 1.2 gebildet, wobei die Querschnittsform des Verriegelungsabschnittes 4 an die Querschnittsform der Durchbrechung 2' im Bauteil 2 derart angepasst ist, dass der Schaftabschnitt 1.2 mit dem Verriegelungsabschnitt 4 in der Durchbrechung 2' schwimmend, d.h. in x- und γ-Richtung verschiebbar aufgenommen ist, jedoch nur ein geringfügiges Verdrehen um die Längsachse LA freigibt, d.h. eine Verdrehsicherung ausbildet. Hierbei bildet beispielsweise die Durchbrechung 2' bzw. deren Querschnittsform im Bauteil 2 die korrespondierenden Verriegelungsmittel 5 im erfindungsgemäßen Sinne aus. Der Querschnitt des Schaftabschnittes 1.2 und die Durchbrechung 2' weisen hierzu eine von der Kreisform abweichen Querschnittsform auf, d.h. sind beispielsweise quadratisch, rechtförmig, dreieckförmig, oval, polygonförmig und/oder sternförmig ausgebildet. Im vorliegenden Ausführungsbeispiel gemäß der Figuren 1, 4 und 7 sind die Durchbrechung 2' und der Querschnitt des Schaftabschnittes 1.2 beispielsweise rechteckförmig ausgebildet.

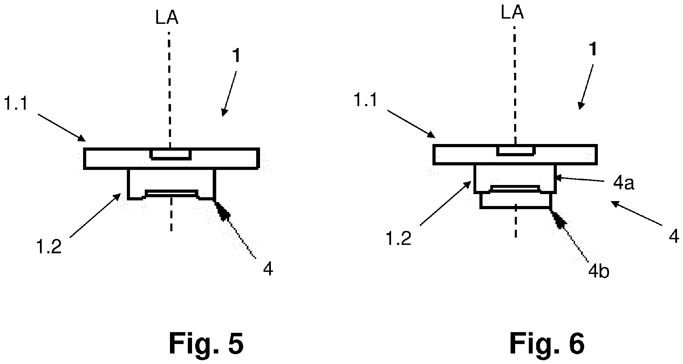

Figur 5 zeigt beispielsweise eine schematische Seitenansicht eines als Mutterelement ausgebildeten Verbindungselementes 1, dessen Verriegelungsabschnitt 4 einstückig oder einteilig mit dem Schaftabschnitt 1.2 des Verbindungselementes 1 ausgebildet ist. Aufgrund der erfindungsgemäßen Wahl der Querschnitte stützen sich damit bei einer Drehbewegung des Verbindungselementes 1 um die Längsachse LA zumindest mehrere Bereiche des Verriegelungsabschnittes 4 an Bereichen des korrespondierenden Verriegelungsabschnittes 5 ab. Die Außenabmessungen des Verriegelungsabschnittes 4 und die Innenabmessungen bzw. der Querschnitt des korrespondierenden Verriegelungsabschnittes 5 sind dabei derart gewählt, dass zumindest abschnittsweise ein Spalt entsteht, der die schwimmende Anordnung gewährleistet.

In einer alternativen Ausführungsvariante gemäß Figur 6 ist der Verriegelungsabschnitt 4a zweiteilig ausgebildet, wobei der erste Teil 4a des Verriegelungsabschnittes 4 sich unmittelbar an den Kopfabschnitt 1.1 des Verbindungselementes 1 anschließt und durch die Mantelfläche des Schaftabschnittes 1.2 gebildet ist. Der zweite Teil 4b des Verriegelungsabschnittes 4 folgt entlang der Längsachse LA unmittelbar auf dem ersten Teil 4a, wobei dieser im Vergleich dazu zumindest leicht querschnittsverjüngt ausgebildet sein kann, d.h. die Mantelfläche des zweiten Teils 4b springt gegenüber der Mantelfläche des ersten Teils 4a des Verriegelungsabschnittes 4 in Richtung der Längsachse LA zurück und bildet einen gestuften Übergang aus. Dieser gestufte Übergangsbereich kann beispielsweise als ringförmige Anlagefläche dienen, an welcher der Randbereich des Durchbrechung 3' des Halteblechelementes 3 zur Anlage gelangt oder sich nach einem plastischen Verformen des freien Endes 1.2' des Schaftabschnittes 1.2 bzw. des zweiten Teils 4b und/oder des Randbereiches der Durchbrechung 3' hiergegen abstützt. Damit ist beispielsweise ein definierter Abstand zwischen der Anlagefläche AF des Kopfabschnittes 1.1 und der Oberseite des Halteblechelementes 3 einstellbar. Dieser Abstand überschreitet zumindest geringfügig die Materialstärke S des Bauteils 2, um die schwimmende Anordnung zu gewährleisten.

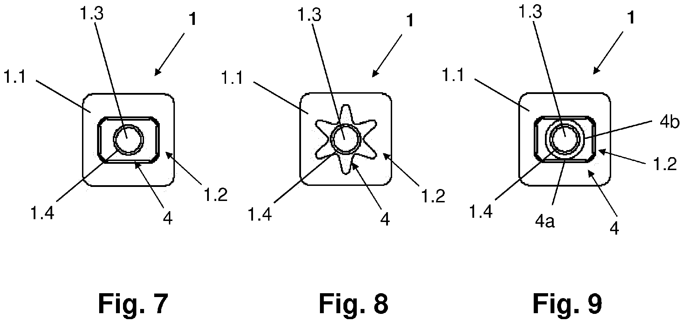

Weitere Ausführungsvarianten des durch den Schaftabschnitt 1.2 des Verbindungselementes 1 ausgebildeten Verriegelungsabschnittes 4 sind in den Figuren 7 und 8 dargestellt, und zwar zeigt Figur 7 eine schematische Draufsicht auf einen rechteckförmigen Verriegelungsabschnitt 4, welcher beispielsweise hinsichtlich seiner Form und Dimensionierung an die in Figur 4 dargestellte rechteckförmige Durchbrechung 2' des Bauteils 2 bzw. den korrespondierenden Verriegelungsmittel 5 angepasst ist.

In Figur 8 ist ebenfalls in einer schematischen Draufsicht ein im Querschnitt sternförmiger Verriegelungsabschnitt 4 gezeigt, der durch eine entsprechende Ausbildung der Mantelfläche des Schaftabschnittes 1.2 des Mutterelementes 2 gebildet ist. Die zugehörige Durchbrechung 2' des Bauteils 2 - nicht in den Figuren dargestellt - und damit der korrespondierende Verriegelungsmittel 5 ist analog dazu ebenfalls sternförmig auszubilden, allerdings derart, dass zwischen dem die Durchbrechung 2' einschließenden Kantenverlauf des Bauteils 2 und der den Verriegelungsabschnitt 4 bildenden Mantelfläche des Schaftabschnittes 1.2 eine spaltförmige Öffnung verbleibt, welche eine schwimmende Bewegung des in der Durchbrechung 2' aufgenommenen Verbindungselementes bzw. Mutterelementes 1 freigibt.

Figur 9 zeigt ebenfalls in einer schematischen Draufsicht auf die Unterseite bzw. die Stirnseite des Schaftabschnittes 1.2 des Verbindungselementes bzw. Mutterelementes 1 mit einem zweiteilig ausgebildeten Verriegelungsabschnitt 4 gemäß der Figur 6. Auch bei dieser Ausführungsvariante ist der erste Teil 4a des Verriegelungsabschnittes 4 im Querschnitt rechteckförmig ausgebildet, wohin der zweite Teil 4b beispielsweise kreisförmig realisiert ist. Bei eine derartigen Ausführungsvariante könnte die Durchbrechung 3' im Halteblechelement 3 beispielsweise ebenfalls kreisförmig und mit leicht vergrößerten Durchmesser ausgebildet sein, um ein Aufstecken und anschließendes Verbinden des Halteblechelementes 3 am zweiten Teil 4b zu ermöglichen.

Alternativ oder zusätzlich kann der Verriegelungsabschnitt 4' am Halteblechelement 3 vorgesehen oder als Teil dessen ausgebildet sein, und zwar wird dieser vorzugsweise durch einen hülsenartigen Schaftabschnitt 3.1 gebildet, welcher einteilig oder einstückig mit dem Halteblechelement 3 ausgebildet ist und von der Oberseite des Halteblechelementes 3 nach außen und vorzugsweise senkrecht wegsteht. Die Querschnittsform des hülsenartigen Schaftabschnittes 3.1 bzw. Verriegelungsabschnittes 4' ist dabei wiederum an die Querschnittsform der Durchbrechung 2' im Bauteil 2 derart angepasst, dass der hülsenartige Schaftabschnitte 3.1 in der Durchbrechung 2' schwimmend, d.h. in x- und γ-Richtung verschiebbar aufgenommen ist, jedoch nur ein geringfügiges Verdrehen um die Längsachse LA freigibt, d.h. sich eine Verdrehsicherung des Halteblechelementes 3 gegenüber dem Bauteil 2 ausbildet. Ist das Halteblechelement 3 - wie zuvor beschrieben - ebenfalls verdrehgesichert am Verbindungselement 1 angebunden, so dass auch eine Verdrehsicherung für das Verbindungselement 1 gegeben. Dieser Verriegelungsabschnitt 4' wirkt damit analog zum zuvor beschriebenen Ausführungsbeispiel mit dem durch die Durchgangsbohrung 2' im Bauteil gebildeten korrespondierenden Verriegelungsabschnitt 5 zur Bereitstellung einer Verdrehsicherung zusammen. Der hülsenartige Schaftabschnitt 3.1 weist eine Durchgangsbohrung 3.1' auf, welche sich in das Halteblechelement 3 fortsetzt und die dortige Durchbrechung 3' bildet.

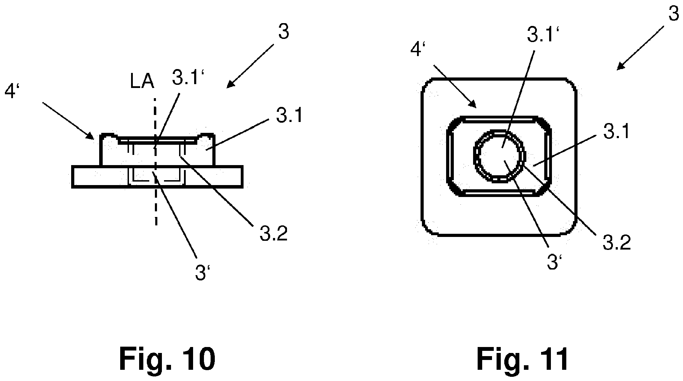

In Figur 10 und 11 ist beispielsweise ein derartig ausgebildetes Halteblechelement 3 mit einem hülsenartigen Schaftabschnitt 3.1 dargestellt, wobei Figur 10 eine schematische Seitenansicht des Halteblechelementes 3 und Figur 11 eine schematische Draufsicht auf die Oberseite des Halteblechelements 3 zeigen.

Vorzugsweise sind die Durchgangsbohrung 3.1' bzw. die daran anschließende Durchbrechung 3' kreisförmig ausgebildet und weisen ein durchgehendes Innengewinde 3.2 auf. Vorteilhaft wird hierdurch ein Verspannen des Bauteils 2 zwischen dem einem als Mutterelement ausgebildeten Verbindungselement 1 und dem Halteblechelement 3 durch Einbringen eines entsprechenden Schraubelementes möglich.

Ebenso kann der Verriegelungsabschnitt 4' bzw. der diesen bildende hülsenartige Schaftabschnitt 3.1 als separates Bauteil ausgebildet sein, welches mit dem Halteblechelement 3 entsprechend verdrehungssicher verbunden ist.

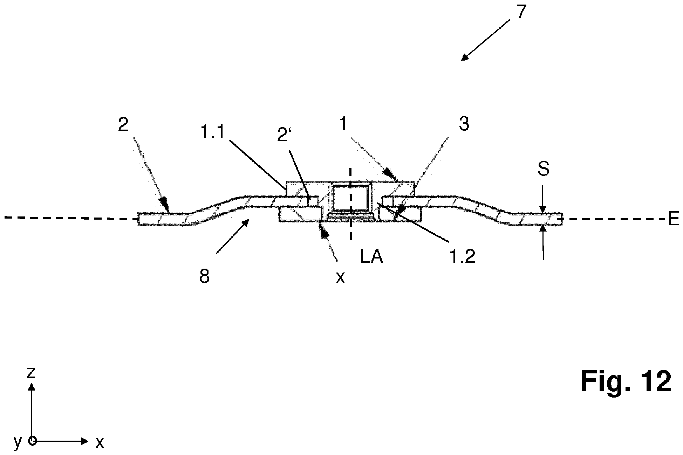

In einer weiteren Ausführungsvariante können die erfindungsgemäße schwimmende und verliergesicherte Anordnung eines Verbindungselementes 1 an einem Bauteil 2 eine vorgefertigte Baugruppe 7 bzw. einen Vorzusammenbau bilden. In Figur 12 ist beispielhaft ein schematischer Längsschnitt durch eine derartige Baugruppe 7 dargestellt. Der Montage- oder Anbindungsbereich befindet sich hierbei in einer flächigen Sicke 8 im Bauteil 2, wodurch der Montagebereich zur Ebene E des Bauteils 2 parallel versetzt ist, und zwar derart, dass darin das Halteblechelement 3 aufgenommen ist. Die Sicke 8 wird vor dem Einbringen des Verbindungselementes 1 in die Durchbrechung 2' in das Bauteil 2 eingebracht. Durch die versenkte Anordnung des Halteblechelementes 3 in der im Bauteil 2 vorgeformten Sicke 8 wird ein Übergleiten des beispielsweise als Mutterelement ausgebildeten Verbindungselementes 1 effektiv verhindert.

Eine derartige Baugruppe 7 kann dann abhängig vom Einsatzzweck und -ort mit einem weiteren Bauteil 6 verbunden werden, welches ebenfalls eine Durchbrechung 6' aufweist, welche vorzugsweise im montierten Zustand mit der Durchbrechung 2' des Bauteils 2 in Flucht angeordnet ist. Das weitere Bauteil 6 erstreckt sich zumindest im Verbindungsbereich entlang der Ebene E und die die Sicke 8 einschließenden Randbereiche des Bauteils 2 liegen an dem weiteren Bauteil 6 an. Die Baugruppe 7 wird vorzugsweise auf das weitere Bauteil 6 gefügt, und zwar beispielsweise mittels Schweißen, Kleben, Stanznieten, Blindnieten oder Durchsetzfügen. In einer alternativen Ausführungsvariante kann die Sicke 8 auch im weiteren Bauteil 6 vorgesehen sein und das die erfindungsgemäße Anordnung umfassende Bauteil 2 keine Sicke 8 aufweisen.

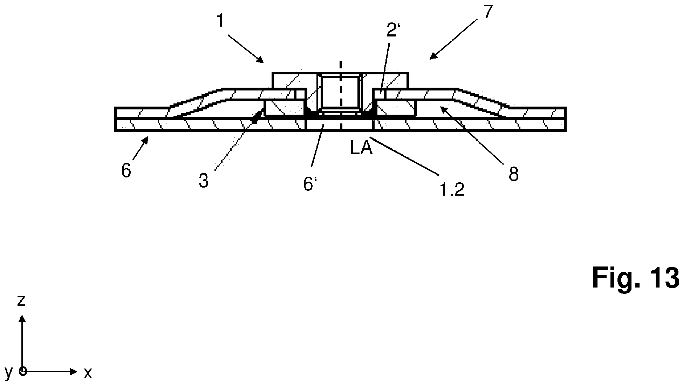

In Figur 13 ist beispielsweise eine Ausführungsvariante einer an ein weiteres Bauteil 6 gefügten Baugruppe 7 dargestellt. Bei der dargestellten Variante ist weiterhin eine schwimmende und verliergesicherte Anordnung des Verbindungselementes 1 gewährleistet, da das Halteblechelement 3 in der Sicke 8 zwischen beiden Bauteilen 2, 6 aufgenommen ist.

Auch kann das Bauteil 2 durch ein Kunststoffbauteil gebildet sein, welches im Bereich der Durchbrechung 2' zwischen dem Kopfabschnitt 1.1 und dem Halteblechelement 3 aufgenommen ist. Bei einer zweiteiligen Ausbildung des Schaftabschnittes 1.2 bzw. des durch diesen teilweise gebildeten Verriegelungsabschnittes 4 kann durch dessen gestufte Ausbildung eine Distanzsperre realisiert werden, welche die Einleitung einer zu hohen Vorspannkraft in das Kunststoffbauteil sperrt. Hier ist die Länge des ersten Teils 4a des Schaftabschnittes 1.2 an die Material- oder Bauteilstärke S des Bauteils 2 angepasst.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichen liste

- 1: Verbindungselement, insbesondere Mutterelement
- 1.1: Kopfabschnitt
- 1.2: Schaftabschnitt
- 1.2': freies Ende
- 1.3: Durchgangsbohrung
- 1.4: Innengewinde
- 1.5: abstehende Materialvorsprünge
- 2: Bauteil
- 2': Durchbrechung
- 3: Halteblechelement
- 3': Durchbrechung
- 3": Ausnehmungen
- 3.1: hülsenartiger Schaftabschnitt
- 3.2: Innengewinde
- 4: Verriegelungsmittel bzw. Verriegelungsabschnitt
- 4': Verriegelungsabschnitt am Halteblech
- 4a: erster Teil
- 4b: zweiter Teil
- 5: korrespondierende Verriegelungsmittel
- 6: weiteres Bauteil
- 6': Durchbrechung
- 7: vorgefertigte Baugruppe
- 8: Sicke
- AF: Anlagefläche
- bm: maximale Öffnungsbreite
- d1: Durchmesser Kopfabschnitt
- d2: Durchmesser Schaftabschnitt
- d3: Durchmesser Durchbrechung Halteblechelement
- E: Ebene des Bauteils
- LA: Längsachse
- S: Materialstärke des Bauteils

## Patentansprüche

1. Schwimmende, verliergesicherte Anordnung eines Verbindungselements (1) an einem aus einem Flachmaterial hergestellten Bauteil (2), bei der das Verbindungselement (1) sich entlang einer Längsachse (LA) erstreckt und zumindest einen Kopfabschnitt (1.1) und einen daran entlang der Längsachse (LA) anschließenden, gegenüber dem Kopfabschnitt (1.1) zurückversetzten Schaftabschnitt (1.2) aufweist, bei der der Schaftabschnitt (1.2) zumindest abschnittsweise durch eine Durchbrechung (2') im Bauteil (2) geführt ist und zumindest im Bereich des dem Kopfabschnitt (1.1) gegenüberliegenden freien Ende (1.2') des Schaftabschnittes (1.2) mit einem Halteblechelement (3) derart verbunden ist, dass das Verbindungselement (1) schwimmend und verliergesichert am Bauteil (2) angeordnet ist, wobei der Schaftabschnitt (1.2) und/oder das Halteblechelement (3) jeweils Verriegelungsmittel (4, 4') aufweisen, die mit im Bereich der Durchbrechung (2') des Bauteils (2) vorgesehenen, korrespondierenden Verriegelungsmitteln (5) derart zusammenwirken, dass das in der Durchbrechung (2') des Bauteils (2) zumindest abschnittsweise aufgenommene Verbindungselement (1) gegen ein zumindest abschnittsweises Verdrehen um die Längsachse (LA) in Bezug auf das Bauteil (2) gesichert ist.

2. Anordnung nach Anspruch 1, **dadurch gekennzeichnet, dass** das Bauteil (2) zwischen dem Kopfabschnitt (1.1) des Verbindungselementes (1) und dem Halteblechelement (3) aufgenommen ist.

3. Anordnung nach Anspruch 1 oder 2, **dadurch gekennzeichnet, dass** vorzugsweise aus einem metallischen Flachmaterial hergestellte Halteblechelement (3) eine Durchbrechung (3') aufweist, dessen Durchmesser und/oder Querschnittsform zumindest abschnittsweise an den Durchmesser und/oder die Querschnittsform zumindest des freien Endes (1.2') des Schaftabschnittes (1.2) des Verbindungselementes (1) angepasst ist.

4. Anordnung nach Anspruch 3, **dadurch gekennzeichnet, dass** das Halteblechelement (3) gegen ein zumindest abschnittsweises Verdrehen um die Längsachse (LA) des Verbindungselementes (1) am freien Ende (1.2') des Schaftabschnittes (1.2) des Verbindungselementes (1) gesichert ist.

5. Anordnung nach einem der vorhergehenden Ansprüche, **dadurch gekennzeichnet, dass** das Halteblechelement (3) eine Außenkontur und/oder Außenabmessungen aufweist, die eine Durchführung des Halteblechelementes (3) durch die Durchbrechung (2') des Bauteils (2) sperren und/oder dass das Halteblechelement (3) verschiebbar entlang der Längsachse (LA) am Schaftabschnitt (1.2) des Verbindungselement (1) angeordnet ist und/oder dass das freie Ende (1.2) des Schaftabschnittes (1.2) derart in der Durchbrechung (3') des Halteblechelementes (3) aufgenommen ist, dass das freie Ende (1.2) von der Unterseite des Halteblechelementes (3) in die Durchbrechung (3") zurückspringt.

6. Anordnung nach einem der vorhergehenden Ansprüche, **dadurch gekennzeichnet, dass** das freie Ende (1.2') des Schaftabschnittes (1.2) des Verbindungselementes (1) vollständig in der Durchbrechung (3') des Halteblechelementes (3) aufgenommen ist und nicht über die Unterseite des Halteblechelementes (3) hervorsteht und/oder dass die Verriegelungsmittel des Schaftabschnittes (1.2) durch zumindest einen Verriegelungsabschnitt (4) des Schaftabschnittes (1.2) des Verbindungselementes (1) gebildet sind, der eine von der Kreisform abweichende Querschnittsform aufweist.

7. Anordnung nach einem der vorhergehenden Ansprüche, **dadurch gekennzeichnet, dass** die Verriegelungsmittel des Halteblechelements (3) durch zumindest einen am Halteblechelement (3) vorgesehen oder als Teil dessen ausgebildeten Verriegelungsabschnitt (4') mit einer von der Kreisform abweichenden Querschnittsform gebildet sind und/oder dass die korrespondierenden Verriegelungsmittel (5) durch eine von der Kreisform abweichende Querschnittsform der Durchbrechung (2') des Bauteils (2) gebildet sind.

8. Anordnung nach einem der Ansprüche 6 oder 7, **dadurch gekennzeichnet, dass** die Querschnittsform des jeweiligen Verriegelungsabschnittes (4, 4') und die Querschnittsform der Durchbrechung (2') derart gewählt sind, dass sich die Querschnittsformen bei einem in der Durchbrechung (2') aufgenommenen Verriegelungsabschnitt (4, 4') und einem am Verbindungselement (1) anliegenden Schraubmoment gegenseitig abstützen.

9. Anordnung nach Anspruch 6 oder 7, **dadurch gekennzeichnet, dass** der zumindest eine Verriegelungsabschnitt (4a) einstückig oder einteilig mit dem Schaftabschnitt (1.2) des Verbindungselementes (1) ausgebildet ist.

10. Anordnung nach einem der Ansprüche 7, 8 oder 9, **dadurch gekennzeichnet, dass** der zumindest eine Verriegelungsabschnitt (4) mehrteilig ausgebildet ist, und zwar einen ersten und zweiten, entlang der Längsachse (LA) aneinander anschließenden Teil (4a, 4b) aufweist.

11. Anordnung nach Anspruch 10, **dadurch gekennzeichnet, dass** der erste Teil (4a) sich unmittelbar an den Kopfabschnitt (1.1) anschließt und der darauffolgende zweite Teil (4b) im Vergleich dazu zumindest leicht querschnittsverjüngt ausgebildet ist, so dass ein gestufter Übergang zwischen dem ersten und zweiten Teil (4a, 4b) entsteht, der eine ringförmige Anlagefläche bildet.

12. Anordnung nach Anspruch 7 oder 8, **dadurch gekennzeichnet, dass** der Verriegelungsabschnitt (4') durch zumindest einen von der Oberseite des Halteblechelementes (3) nach außen wegstehenden hülsenartigen Schaftabschnitt (3.1) gebildet ist, wobei der hülsenartige Schaftabschnitt (3.1) vorzugsweise einteilig oder einstückig mit dem Halteblechelement (3) ausgebildet ist.

13. Anordnung nach Anspruch 7 bis 12, **dadurch gekennzeichnet, dass** die Querschnittsform des Verriegelungsabschnittes (4) und/oder die Querschnittsform der Durchbrechung (2') und/oder die Querschnittsform (4') des hülsenartigen Schaftabschnittes (3.1) quadratisch, rechteckförmig, polygonförmig, dreieckförmig, oval oder sternförmig ist.

14. Anordnung nach einem der vorhergehenden Ansprüche, **dadurch gekennzeichnet, dass** das Verbindungselement (1) als gewindetragendes Verbindungselement, insbesondere als Mutterelement oder als Bolzenelement oder als Schraubelement ausgebildet ist und/oder dass die Durchbrechung (2') im Bauteil (2) und/oder die Durchbrechung (3') im Halteblechelement (3) durch eine Vorlochung oder eine Bohrung gebildet ist.

15. Anordnung nach einem der vorhergehenden Ansprüche, **dadurch gekennzeichnet, dass** am freien Ende (1.2') des Schaftabschnittes (1.2) des Verbindungselementes (1) mehrere stirnseitig angeordnete, nasenförmige Materialvorsprünge (1.5) und an der Unterseite des Halteblechelementes (3) mehrere, zur Durchbrechung (3') hin geöffnete korrespondierende Ausnehmungen (3") vorgesehen sind, in welche die nasenförmigen Materialvorsprünge (1.5) zur Herstellung einer Verdrehsicherung plastisch verformbar sind.

16. Vorgefertigte Baugruppe umfassend eine Anordnung gemäß einem der Ansprüche 1 bis 15.

17. Vorgefertigte Baugruppe nach Anspruch 16, **dadurch gekennzeichnet, dass** das Bauteil (2) mit einem weiteren Bauteil (9) mit einer korrespondierenden Durchbrechung (9') verbunden ist.
